Europäisches Patentamt

European Patent Office

Office européen des brevets

(11) Numéro de publication: **0 112 259**
**A1**

(12) ## DEMANDE DE BREVET EUROPEEN

(21) Numéro de dépôt: 83420172.5

(22) Date de dépôt: 08.11.83

(51) Int. Cl.³: **C 21 C 7/00**
**B 22 D 1/00, B 23 K 35/02**
**B 21 D 39/04, C 22 B 9/10**

(30) Priorité: 15.11.82 FR 8219271

(43) Date de publication de la demande:
27.06.84 Bulletin 84/26

(84) Etats contractants désignés:
AT BE DE GB IT SE

(71) Demandeur: **VALLOUREC**
**7, place du Chancelier Adenauer**
**F-75016 Paris(FR)**

(72) Inventeur: **Douchy, Michel**
**Route de Solesmes Vertain**
**F-59730 Solesmes(FR)**

(74) Mandataire: **de Passemar, Bernard et al,**
**VALLOUREC 7 Place du Chancelier Adenauer**
**F-75016 Paris(FR)**

(54) Raccord d'extrémités de fils fourrés.

(57) Le raccord d'extrémités suivant l'invention concerne les liaisons qui sont réalisées entre les extrémités de fils fourrés contenant des éléments ou composés réducteurs et/ou d'addition et/ou d'autres éléments ou composés pour le traitement de métaux ou alliages liquides.

Ce raccord comporte un manchon métallique de forme tubulaire (7) qui entoure les deux extrémités (1, 2) de fils fourrés, qui sont alignées bout à bout suivant un axe de raccordement. La paroi de ce manchon et celle de l'enveloppe du fil fourré sous-jacente comportent des déformations localisées (26, 27, 28) en au moins deux emplacements situés de part et d'autre de la zone de rencontre des deux extrémités de fils fourrés.

Application à la constitution d'un fil fourré continu de longueur suffisante à partir de tronçons.

FIG.1

EP 0 112 259 A1

RACCORD D'EXTREMITES DE FILS FOURRES

Le raccord d'extrémité de fil fourré qui fait l'objet de l'invention concerne les liaisons qui sont réalisées bout à bout entre les extrémités de fils fourrés. Le fil fourré est un produit composite de relativement grande longueur, comportant une enveloppe métallique mince et une âme en une matière pulvérulente ou granulaire qui adhère à l'enveloppe. Cette matière peut comprendre des éléments ou composés réducteurs et/ou des éléments d'addition, permettant d'ajuster ou de modifier la composition d'alliages métalliques et/ou d'autres éléments ou composés.

On utilise les fils fourrés pour le traitement de bains métalliques fondus en les faisant pénétrer à l'intérieur de ces bains. De tels fils et leur utilisation sont décrits, par exemple, dans la demande de brevet européen n° 00 34994.

Bien que ces fils fourrés soient généralement fabriqués en longueurs unitaires relativement grandes, le problème se pose, lors de leur utilisation, de réaliser entre des tronçons résiduels de relativement faible longueur des raccords pour pouvoir reconstituer un fil continu d'une longueur suffisante pour effectuer le traitement d'un ou plusieurs bains métalliques sans risque d'interruption en cours d'opération. De même, en cours de traitement d'un bain métallique, il peut être nécessaire de réaliser très rapidement, en quelque sorte à la volée, un raccord entre l'extrémité arrière d'un tronçon de fil fourré en cours d'introduction dans le bain et l'extrémité avant d'un nouveau tronçon de fil fourré.

L'invention concerne également un procédé de réalisation des raccords d'extrémités suivant l'invention ainsi qu'un dispositif pour la mise en oeuvre de ce procédé.

La mise en oeuvre des fils fourrés est généralement effectuée par des moyens automatiques qui permettent de dérouler le fil fourré qui a été préalablement enroulé sur une bobine, puis de le dresser et de l'entraîner au moyen de rouleaux afin de l'introduire de façon continue

dans le récipient contenant le métal fondu qu'il s'agit de traiter. De tels moyens de mise en oeuvre sont décrits, par exemple, dans le brevet US. 4 134 196, colonne 6, lignes 4 à 24 et figure 4.

On comprend qu'on ne peut envisager, par exemple, de relier les extrémités de tronçons de fils fourrés par juxtaposition et ligature, car les raccords d'extrémité ainsi réalisés ne pourraient pas traverser les moyens d'entraînement, de dressage et de guidage du fil fourré, qui sont utilisés pour l'introduction dans le bain métallique. On ne peut pas davantage envisager de réaliser ces raccords d'extrémités par soudage bout à bout des fils fourrés à cause de la minceur de l'enveloppe et de la réactivité de la matière pulvérulente ou granulaire qu'ils contiennent.

Par ailleurs, et plus particulièrement dans le cas d'un fil fourré dont la section est approximativement un rectangle à sommets arrondis et présente au moins deux zones aplaties parallèles qui en forment les grands côtés, tel que celui décrit dans la demande de brevet européen n° 00 34994, on comprend que le déroulage et le guidage de ce fil en direction du récipient d'utilisation doivent pouvoir être faits de façon à éviter une torsion du fil sur lui-même autour de son axe. Pour cela, les moyens de guidage doivent pouvoir prendre appui sur le contour du fil qui ne doit donc pas présenter de discontinuités ou de surépaisseurs importantes. La section de tels fils s'inscrit dans des rectangles qui, à titre d'exemple, peuvent mesurer de façon courante approximativement 8 par 4 ou 12 par 6, ou encore 16 par 8 mm.

Le procédé de réalisation des raccords d'extrémités doit, de préférence, pouvoir être mis en oeuvre à température ambiante car un échauffement important risquerait de modifier à la fois les caractéristiques de la gaine et de la matière de remplissage. Ce procédé doit pouvoir aussi être mis en oeuvre de façon rapide en faisant appel à un dispositif d'un maniement simple.

Le raccord d'extrémités de fils fourrés suivant l'invention ainsi que le procédé et le dispositif qui permettent de réaliser un tel raccord d'extrémités apportent une solution particulièrement simple et efficace à ce problème.

Le raccord d'extrémités de fil fourré, qui constitue l'un des objets de l'invention, comporte un manchon métallique de forme tubulaire, qui entoure les deux extrémités de fils fourrés qui sont alignées bout à bout suivant un axe de raccordement ; la paroi de ce manchon et celle de l'enveloppe du fil fourré sous-jacente sont solidarisées au moyen de déformations localisées en au moins deux emplacements situés de part et d'autre de la zone de rencontre des deux extrémités des fils fourrés.

Ce manchon est, de préférence, constitué par une plaquette de tôle métallique cintrée qui entoure l'enveloppe du fil fourré et qui est serrée sur celle-ci. A l'endroit de ces déformations localisées, qui sont le plus souvent des empreintes en creux, il est avantageux que la paroi du manchon, et souvent aussi celle de l'enveloppe, soient percées localement.

De façon avantageuse, le fil fourré présente une section sensiblement rectangulaire dont les grands côtés sont sensiblement rectilignes, les petits côtés et les sommets étant généralement arrondis.

Un autre objet de l'invention est un procédé de réalisation d'un raccord d'extrémités de fils fourrés, qui consiste à entourer les deux extrémités de fils fourrés par un manchon métallique tubulaire à l'intérieur duquel les deux extrémités sont alignées bout à bout suivant un axe de raccordement et à déformer de façon localisée la paroi du manchon et celle de l'enveloppe du fil fourré sous-jacente en au moins deux emplacements situés de part et d'autre de la zone de rencontre des deux extrémités de fils fourrés.

Dans ce procédé, on forme, de préférence, le manchon par cintrage d'une plaquette de tôle métallique. Le cintrage de cette plaquette est avantageusement réalisé au moyen d'une matrice en deux parties dans laquelle, lorsqu'elle est en position ouverte, on place la plaquette qui a été au préalable préformée de façon à présenter une section perpendiculaire à l'axe de raccordement en forme de U ;

on dispose ensuite à l'intérieur de ce U les deux extrémités de fils fourrés, alignées bout à bout suivant l'axe de raccordement, et enfin on ferme la matrice en serrant les deux parties de celle-ci l'une contre l'autre de façon à serrer le manchon sur les deux extrémités des fils fourrés.

Dans ce procédé, on déforme de façon localisée la paroi du manchon et celle de l'enveloppe du fil fourré en réalisant, sur au moins l'une des parois intérieures de la matrice et/ou d'un poinçon des reliefs qui viennent en appui contre la paroi du manchon au moment de la fermeture de la matrice avec une force qui dépasse localement la limite élastique de celle-ci ainsi que celle de l'enveloppe du fil fourré dans la zone immédiatement sous-jacente.

L'invention a également pour objet un dispositif pour la mise en oeuvre d'un procédé de réalisation d'un raccord d'extrémité de fils fourrés. Ce dispositif comporte une matrice ouvrante en deux parties dont la ligne de fermeture est parallèle à l'axe de raccordement des deux extrémités de fils fourrés alignées bout à bout, la section intérieure de cette matrice en position de fermeture, mesurée dans un plan perpendiculaire à l'axe de raccordement, étant égale ou légèrement supérieure à celle des extrémités de fils fourrés à assembler, l'une au moins des deux parties de la matrice pouvant être écartée de l'autre par un moyen de déplacement d'une quantité suffisante pour loger les deux extrémités de fils fourrés, en tenant compte éventuellement de la légère surépaisseur apportée par le manchon, un moyen de poussée permettant de refermer la matrice. La matrice comporte des moyens de déformation localisée de la paroi du manchon et de celle de l'enveloppe de fil fourré qui agissent en position de fermeture de ladite matrice de part et d'autre de la zone de rencontre des deux extrémités des fils fourrés. Ces moyens de déformation localisée sont avantageusement portés par l'une au moins des deux parties de la matrice sur sa face interne et sont constitués par exemple de reliefs tels que picots, dents ou nervures. En variante ou en complément au mode de réalisation déjà cité, un poinçon disposé à l'extérieur de la matrice comportant au moins deux reliefs disposés de part et d'autre du plan perpendiculaire à l'axe de raccordement passant par la zone de rencontre des deux extrémités de fil fourré peut être actionné par un moyen de poussée en direction de la paroi de la matrice qui comporte des orifices à travers lesquels peuvent passer les reliefs de façon qu'ils viennent en appui sur la paroi du manchon et qu'ils puissent la déformer de façon localisée ainsi que l'enveloppe sous-jacente.

La description et les figures ci-après décrivent, de façon non limitative, le raccord d'extrémités de fils fourrés suivant l'invention ainsi que un mode de mise en oeuvre d'un procédé de réalisation de ce raccord et un dispositif utilisé dans ce procédé :

Figure 1 : vue en coupe, suivant le plan A de la figure 2, du dispositif suivant l'invention.

Figure 2 : vue en plan, suivant la flèche B de la figure 1, du dispositif suivant l'invention.

Figure 3 : vue en coupe, suivant les demi-plans $C_1$ et $C_2$ de la figure 2, du dispositif suivant l'invention, la matrice étant en position de fermeture et le poinçon en butée sur la matrice.

Figure 4 : vue en perspective d'un raccord d'extrémités de fils fourrés suivant l'invention.

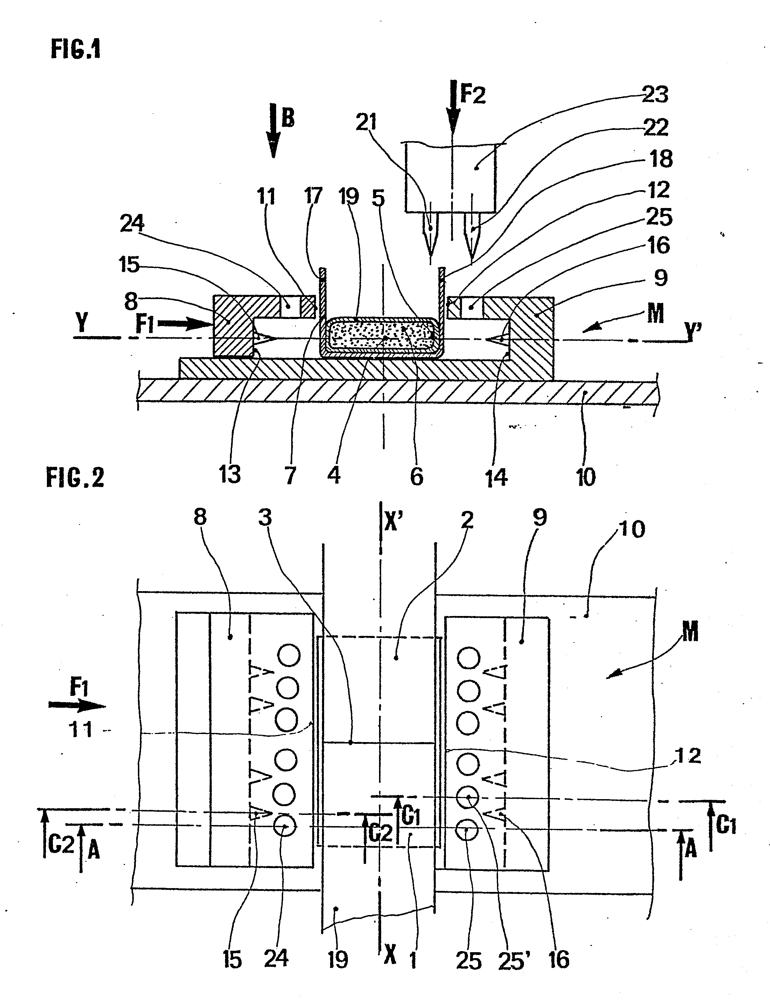

Les figures 1 et 2 représentent un dispositif utilisé dans le procédé de réalisation du raccord suivant l'invention.

Les deux extrémités (1 et 2),de fils fourrés qu'il s'agit de raccorder, sont alignées bout à bout suivant un plan de contact (3) dans le prolongement l'une de l'autre suivant l'axe de raccordement XX' qui, dans le cas de la figure, correspond à l'axe de symétrie du fil fourré. Cet axe XX' est perpendiculaire au plan de la figure 1 qu'il traverse en (4).

Les fils fourrés comportent, de façon connue, une enveloppe métallique en tôle mince (5) et un remplissage de matière granulaire ou pulvérulente (6).

Les extrémités (1 et 2) des fils fourrés sont logées, comme le montrent les figures 1 et 2, dans une gouttière en tôle mince (7) et l'ensemble est placé à l'intérieur d'une matrice (M) en deux parties (8) et (9), qui repose elle-même sur un support (10). La partie (9) de la matrice (M) est fixée rigidement sur le support (10) tandis que la partie (8) peut glisser transversalement par rapport à l'axe XX' et parallèlement à elle-même sur le support (10) grâce à des moyens de déplacement et de guidage connus et non représentés.

Sur ces deux figures, la matrice (M) est en position d'ouverture et on remarque que l'écartement de ses bords supérieurs (11) et (12) est tel qu'il permet l'engagement à l'intérieur de la matrice (M) de la gouttière (7) formée à partir d'une plaquette de tôle métallique mince, et l'introduction dans cette gouttière des extrémités (1 et 2) de fils fourrés à raccorder. Afin que le raccordement se fasse de façon satisfaisante, il est souhaitable, mais non nécessaire, que les faces d'extrémité de fils fourrés en regard soient coupées de façon nette suivant des plans perpendiculaires à l'axe de raccordement, de façon que les deux extrémités de fils fourrés soient bout à bout, de préférence en appui l'une contre l'autre, avec le minimum de jeu, suivant un plan sensiblement perpendiculaire à l'axe de raccordement dont on voit la trace (3), figure 2.

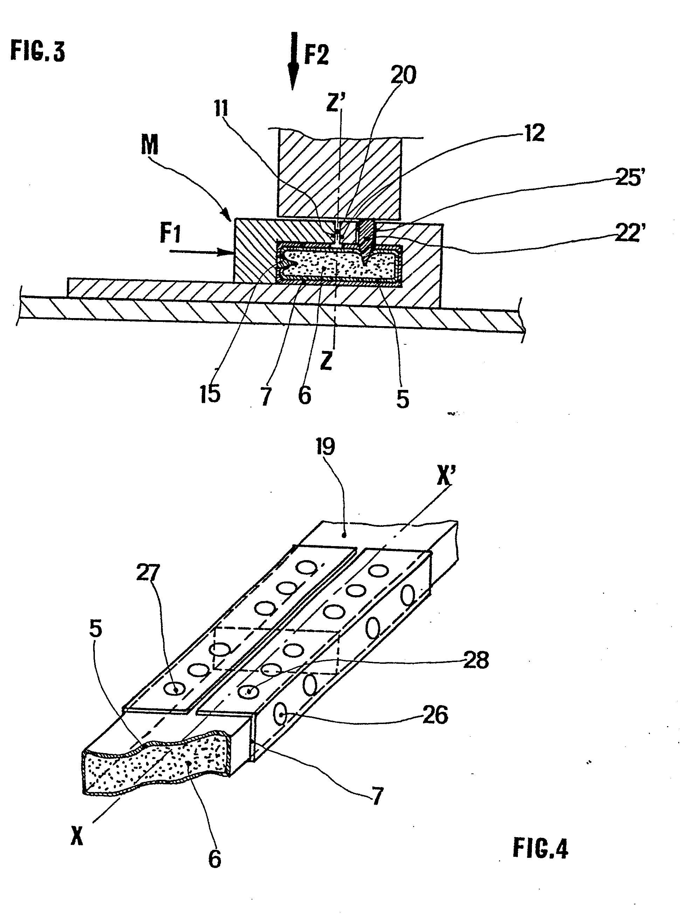

Chacune des deux parties (8 et 9) de la matrice composite comporte sur ses faces latérales internes (13 et 14) des reliefs tels que (15 et 16) de forme sensiblement conique dans le cas des figures 1 à 4. On voit que, dans ce cas (figure 4), ces reliefs formés sur les faces latérales de la matrice sont au nombre de 4 de chaque côté de l'axe XX', et également au nombre de 4 de chaque côté du plan (3) d'appui des deux extrémités de fil fourré à assembler.

On comprend que, dans ces conditions, si on exerce sur la partie mobile (8) de la matrice une force $F_1$ suffisante, celle-ci se déplace en direction de la partie fixe (9) jusqu'à ce que les bords supérieurs (11 et 12) arrivent à proximité immédiate l'un de l'autre. Le volume intérieur de la matrice fermée est déterminé de façon qu'il puisse contenir le fil fourré recouvert de la gouttière (7) formant manchon.

En effet, au cours du rapprochement des deux parties (8) et (9) de la matrice, les bords supérieurs (17) et (18) de la gouttière (7) sont cintrés par la poussée des bords (11 et 12) de la matrice et viennent se plaquer contre la face supérieure (19) de l'enveloppe (5) du fil fourré.

Dans le cas de la figure 3, on remarque que, après fermeture de la

-7-

matrice suivant un plan de fermeture perpendiculaire à celui de la figure et dont la trace est indiquée en ZZ', il reste encore un léger jeu (20) entre les bords supérieurs (11 et 12) de la matrice. Ce jeu permet de garantir un serrage efficace du manchon (7) sur les deux parties d'extrémité (1 et 2) des fils fourrés à assembler.

Pendant cette phase de fermeture de la matrice, les huit reliefs tels que (15) et (16) viennent au contact de la paroi du manchon et traversent celle-ci ainsi que l'enveloppe du fil fourré sous-jacente. La demi-coupe $C_2C_2$ de la figure 2, représentée dans la partie gauche de la figure 3, montre le relief (15) engagé dans le fil fourré. On donne avantageusement à ces reliefs la forme conique représentée.

La hauteur du cône et son angle au sommet sont déterminés en fonction de l'épaisseur du manchon et de l'enveloppe, et aussi en fonction des caractéristiques mécaniques des métaux ou alliages constituant ce manchon et cette enveloppe.

On utilise, pour réaliser cette matrice et ces reliefs, des métaux ou alliages métalliques de dureté suffisante pour résister à l'usure et à la déformation pendant un long usage. Dans le cas où on met en oeuvre des manchons et des enveloppes de dureté élevée, on peut employer des matrices comportant des reliefs en carbures durs tels que le carbure de tungstène, le carbure de titane, ou encore des carbures mixtes.

Dans le cas où on souhaite déformer le manchon et l'enveloppe de façon permanente, sans les traverser complètement, on utilise non pas des reliefs pointus mais des reliefs arrondis tels que des cônes à pointe émoussée, ou encore des sortes de nervures ou de stries. On limite de plus la hauteur de ces reliefs de façon à ne pas atteindre l'allongement de rupture du métal qui constitue l'enveloppe du fil fourré. L'utilisation de tels reliefs permet d'éviter ou de limiter les risques de contamination par l'humidité de la matière pulvérulente ou granulaire contenu dans l'enveloppe et aussi d'éviter ou de limiter les pertes de cette matière à travers les perforations réalisées.

En plus des reliefs que comportent les parois latérales de la matrice, ou éventuellement à la place de ceux-ci, on utilise avantageusement (voir figures 1 et 3), des reliefs tels que (21, 22,22!) solidaires d'un poinçon (23) qui peut se déplacer suivant l'axe ZZ' grâce à des moyens connus de déplacement et de serrage qui ne sont pas décrits. Chacun des reliefs tels que (21, 22,22.), solidaire du poinçon (23), est orienté en direction de la face supérieure (19) de l'enveloppe du fil fourré, elle-même recouverte à la suite de la fermeture de la matrice par les bords rabattus (17 et 18) du manchon.

Le nombre , l'emplacement et les dimensions de ces reliefs sont déterminés de façon que chacun d'eux, lorsqu'on déplace verticalement le poinçon en direction de la matrice fermée, vienne traverser un trou tel que (24, 25,25').

Dans le cas du poinçon représenté en coupe, figures 1 et 3, celui-ci comporte deux rangées comprenant chacune six reliefs à pointe conique qui, au cours de la descente du poinçon en direction de la matrice traversent chacun l'un des douze trous percés verticalement en deux rangées de six à travers la paroi supérieure de la matrice (figure 2), l'une des rangées étant percée au voisinage du bord (11) de la partie (8) de la matrice, et l'autre au voisinage du bord (12) de la partie (9) de la matrice. La hauteur des reliefs tels que (21, 22·, 22') est déterminée de façon que, lorsque le poinçon (23) vient en butée contre la paroi supérieure de la matrice, les extrémités de ces reliefs déforment de façon permanente les bords (17 et 18) du manchon (7), ainsi que la partie sous-jacente de l'enveloppe du fil fourré. Dans le cas de la figure 3, dont la partie droite est une demi-coupe suivant $C_1C_1$ de la figure 2, le relief (22')traverse le trou (25') de la matrice, puis la paroi (7) du manchon et l'enveloppe (5) du fil fourré.

On voit figure 2 que les trous tels que (24, 25, 25') sont décalés le long de l'axe de raccordement XX' par rapport aux reliefs tels que (15 et 16), de façon que les reliefs du poinçon dont l'emplacement correspond à celui des trous ne rencontrent pas ceux de la matrice à l'intérieur des fils fourrés. Après relevage du poinçon et ouverture de la matrice, on dégage, comme le montre la figure 4, le raccord d'extrémités de fils fourrés suivant l'invention. Il est constitué par les deux extrémités (1 et 2) des fils fourrés solidarisées par le manchon (7) au moyen d'un ensemble de déformations localisées en creux telles que (26, 27, 28), qui ont été réalisées respectivement par les reliefs (16) de la matrice et (21, 22) du poinçon.

On comprend qu'un tel raccord d'extrémités de fils fourrés présente une très grande résistance à la traction suivant l'axe XX' et aussi une très grande résistance au vrillage.

Etant donné l'épaisseur relativement faible du manchon (7), cette zone de raccordement traverse facilement les moyens de guidage, d'entraînement et de dressage qui sont utilisés pour introduire le fil fourré dans les bains de métal liquide à traiter.

Etant donné aussi la longueur relativement faible du manchon, l'existence de cette zone de raccordement ne fait pas obstacle à l'enroulement du fil fourré sur des bobines et à son propre passage, au cours du déroulement à travers des moyens de dressage comportant par exemple des galets rainurés à la dimension du fil fourré.

De nombreux autres modes de réalisation du procédé et du dispositif suivant l'invention peuvent être envisagés. On peut, en particulier, donner aux reliefs des formes et des dimensions très variées suivant les caractéristiques des métaux qui constituent la paroi du manchon et l'enveloppe du fil fourré et suivant aussi la section de celui-ci.

-10-

REVENDICATIONS

1°/ - Raccord d'extrémités de fils fourrés caractérisé en ce qu'il comporte un manchon métallique (7) de forme tubulaire, qui entoure les deux extrémités (1, 2) de fils fourrés qui sont alignées bout à bout suivant un axe de raccordement, la paroi de ce manchon et celle de l'enveloppe (5) du fil fourré sous-jacente comportant des déformations localisées (26, 27, 28) en au moins deux emplacements situés de part et d'autre de la zone de rencontre des deux extrémités de fils fourrés.

2°/ - Raccord d'extrémités suivant revendication 1, caractérisé en ce que le manchon est constitué par une plaquette de tôle métallique cintrée qui entoure l'enveloppe du fil fourré et qui est serrée sur celle-ci.

3°/ - Raccord d'extrémités suivant revendication 1 ou 2, caractérisé en ce que les déformations localisées de la paroi du manchon et de l'enveloppe de fils fourrés sous-jacente sont des empreintes en creux.

4°/ - Raccord d'extrémités suivant l'une des revendications 1 à 3, caractérisé en ce que, au niveau des déformations localisées, au moins la paroi du manchon est percée localement.

5°/ - Raccord d'extrémités suivant l'une des revendications 1 à 4, caractérisé en ce que l'enveloppe du fil fourré et le manchon qui l'entoure ont une section sensiblement rectangulaire à sommets arrondis.

6°/ - Raccord d'extrémités suivant revendication 5, caractérisé en ce qu'il comporte des déformations localisées (26, 27, 28) sur trois faces.

7°/ - Raccord d'extrémités suivant l'une des revendications 3 à 6, caractérisé en ce que les empreintes ont une forme sensiblement conique.

8°/ - Procédé de réalisation d'un raccord d'extrémités de fils fourrés,

caractérisé en ce que l'on entoure les deux extrémités de fils fourrés (1, 2) par un manchon métallique tubulaire (7) à l'intérieur duquel ces deux extrémités sont alignées bout à bout suivant un axe de raccordement et en ce que l'on déforme localement la paroi de ce manchon et celle de l'enveloppe de fils fourrés sous-jacente en au moins deux emplacements situés de part et d'autre de la zone de rencontre des deux extrémités de fils fourrés.

9°/ - Procédé suivant la revendication 8, caractérisé en ce que le manchon est constitué par une plaquette de tôle qu'on cintre autour des deux extrémités de fils fourrés, disposées bout à bout.

10°/ - Procédé suivant la revendication 9, caractérisé en ce que le cintrage de la plaquette en forme de manchon est réalisé au moyen d'une matrice en deux parties (8, 9) à l'intérieur de laquelle on place, lorsqu'elle est en position d'ouverture, la plaquette de tôle (7) destinée à constituer le manchon, qui a été préformée, de façon à présenter une section perpendiculaire à l'axe de raccordement ayant sensiblement la forme d'un U et en ce que, après avoir disposé bout à bout les deux extrémités de fils fourrés alignées suivant l'axe de raccordement à l'intérieur de ce U, on ferme la matrice en serrant les deux parties de celle-ci l'une contre l'autre, les dimensions intérieures de la matrice fermée étant sensiblement égales à la section des fils fourrés qu'il s'agit de raccorder en tenant compte éventuellement de la légère surépaisseur apportée par la paroi du manchon.

11°/ - Procédé suivant l'une des revendications 8 à 10, caractérisé en ce que les déformations locales du manchon sont réalisées au moyen de reliefs (15, 16, 21, 22), formés sur au moins l'une des parois latérales de la matrice et/ou au moins un poinçon, qu'on déplace transversalement par rapport à l'axe du fil en direction de la paroi du manchon et qu'on applique contre cette paroi avec une force dépassant localement la limite élastique de celle-ci ainsi que celle de l'enveloppe du fil fourré dans la zone immédiatement sous-jacente.

12°/ - Procédé suivant la revendication 11, caractérisé en ce que les reliefs solidaires du poinçon traversent au moins l'une des parois de la matrice à travers des orifices (24, 25, 25') préexistants avant de rencontrer la paroi du manchon (7).

13°/ - Procédé suivant l'une des revendications 11 ou 12, caractérisé en ce que au moins quelques uns des reliefs perforent la paroi du manchon ainsi que celle de l'enveloppe du fil fourré dans la zone immédiatement sous-jacente.

14°/ - Dispositif pour la mise en oeuvre d'un procédé de réalisation d'un raccord d'extrémités de fils fourrés, caractérisé en ce qu'il comporte une matrice ouvrante en deux parties (8,9) dont la ligne de fermeture est parallèle à l'axe de raccordement des deux extrémités (1,2) de fils fourrés, alignées bout à bout, la section intérieure de la matrice mesurée dans un plan perpendiculaire à l'axe de raccordement en position de fermeture de cette matrice étant égale ou légèrement supérieure à celle des fils fourrés à assembler, en ce que l'une au moins des deux parties de la matrice peut être écartée de l'autre par un moyen de déplacement d'une quantité suffisante pour loger dans la matrice les deux extrémités du fil fourré en tenant compte éventuellement de la légère surépaisseur apportée par le manchon (7), un moyen de poussée permettant de refermer la matrice, et en ce que la matrice comporte des moyens de déformation localisée de la paroi du manchon et de celle de l'enveloppe de fil fourré qui agissent en position de fermeture de ladite matrice de part et d'autre de la zone de rencontre des deux extrémités des fils fourrés.

15°/ - Dispositif suivant revendication 14, caractérisé en ce que les moyens de déformation localisée sont portés par l'une au moins des deux parties de la matrice sur sa face interne et sont constitués de reliefs (15,16) tels que picots, dents ou nervures.

16°/ - Dispositif suivant revendication 14 ou 15, caractérisé en ce que au moins un poinçon (23) disposé à l'extérieur de la matrice et comportant au moins deux reliefs disposés de part et d'autre du plan perpendiculaire à l'axe de raccordement passant par la zone de rencontre des deux extrémités de fils fourrés, est actionné par un moyen de poussée en direction de la paroi de la matrice de façon que les reliefs (21,22, 22') traversent des orifices (24, 25, 25') ménagés dans les parois de la matrice et viennent en appui sur la paroi du manchon.

17°/ - Dispositif suivant revendication 15 ou 16, caractérisé en ce que la hauteur des reliefs et la force des moyens de poussée sont déterminées de façon que, après fermeture de la matrice et/ou après poussée du poinçon, les reliefs de la matrice et/ou les reliefs du poinçon percent la paroi du manchon et/ou l'enveloppe sous-jacente du fil fourré.

**FIG.1**

**FIG.2**

**FIG.3**

F2

20

11   Z'

M   12

25'

F1

22'

15   7   6   Z   5

19

X'

27

5

28

26

X   7

6   **FIG.4**

**0112259**

Numéro de la demande

**Office européen des brevets**

# RAPPORT DE RECHERCHE EUROPEENNE

EP   83 42 0172

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-3 915 693   (RASMUSSEN) | | C 21 C    7/00 B 22 D    1/00 B 23 K   35/02 B 21 D   39/04 C 22 B    9/10 |
| A,D | EP-A-0 034 994   (VALLOUREC) | | |
| A | FR-A-2 235 200   (OVAKO) | | |
| A | US-A-2 298 686   (DAVIS) | | |
| A | DE-A-2 531 263   (R. TSCHERWITSCHKE GmbH) | - | |
| A | FR-A-2 022 483   (ED. ZUBLIN) | | **DOMAINES TECHNIQUES RECHERCHES (Int. Cl. ³)** B 22 D B 23 K B 21 D C 21 C C 22 B |

Le présent rapport de recherche a été établi pour toutes les revendications

| Lieu de la recherche LA HAYE | Date d'achèvement de la recherche 21-02-1984 | Examinateur OBERWALLENEY R.P.L.I |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82